# EUROPEAN PATENT APPLICATION

(11) **EP 4 075 914 A1**
(43) Date of publication of application: **19.10.2022**
(21) Application number: 20910605.3
(22) Date of filing: 02.01.2020
(51) Int. Cl.: H04W 76/10, H04W 88/04

(54) **METHOD AND APPARATUS FOR LINK SWITCHING, AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: LIU, Jianhua, Dongguan, Guangdong 523860 (CN); YANG, Haorui, Dongguan, Guangdong 523860 (CN)
(74) Representative: Taor, Simon Edward William
(86) International application number: PCT/CN2020/070132
(87) International publication number: WO 2021/134756

(57) **Abstract**

Embodiments of the present application provide a method and apparatus for link switching, and a communication device. The method comprises: a first terminal communicates with a network by means of an air interface direct link; and if the first terminal detects that the link quality of the air interface direct link becomes poor or receives indication information of a network side, the first terminal triggers establishment of a relay link, and switches from the air interface direct link to the relay link.

## Description

### TECHNICAL FIELD

The disclosure relates to the field of mobile communication technologies, and particularly to a method and device for link switching, and a communication device.

### BACKGROUND

With the continuous development of 5^{th} Generation (5G) mobile communication technology, as a new service form, a direct communication service between devices has been introduced into the standard for associated standardization.

For the direct communication between devices, there are multiple paths for terminals to communicate. For example, communication between terminals is performed via a network. In a procedure during with the terminal communicates with the network, there are two paths for selection. If path switching (i.e., switching from a current path to the other path) occurs when the terminal is communicating with a peer-side via one of the two paths, the service may be interrupted and poor experience may be brought to users.

### SUMMARY

Embodiments of the present disclosure provide a method and device for link switching, and a communication device.

A method for link switching provided in the embodiments of the disclosure includes the following operations.

A first terminal communicates with a network via an air interface direct link.

In response to the first terminal detecting that a link quality of the air interface direct link deteriorates or receiving indication information from a network side, the first terminal triggers establishment of a relay link and switches from the air interface direct link to the relay link.

A method for link switching provided in the embodiments of the disclosure includes the following operations.

A first terminal communicates with a network via a relay link.

In response to the first terminal detecting that a link quality of a Uu interface is greater than or equal to a second threshold, the first terminal determines to switch from the relay link to an air interface direct link.

A device for link switching provided in the embodiments of the disclosure is applied to a first terminal and includes a communicate unit and a switching unit.

The communication unit is configured to communicate with a network via an air interface direct link.

The switching unit is configured to, in response to detecting that a link quality of the air interface direct link deteriorates or receiving indication information from a network side, trigger establishment of a relay link and switch from the air interface direct link to the relay link.

A device for link switching provided in the embodiments of the disclosure is applied to a first terminal and includes a communicate unit and a switching unit.

The communication unit is configured to communicate with a network via a relay link.

The switching unit is configured to, in response to detecting that a link quality of a Uu interface is greater than or equal to a second threshold, determine to switch from the relay link to an air interface direct link.

A communication device provided in the embodiments of the disclosure includes a processor and a memory. The memory is configured to store a computer program, and the processor is configured to call and run the computer program stored in the memory to perform the above method for link switching.

A chip provided in the embodiments of the disclosure is configured to perform the above method for link switching.

Specifically, the chip includes a processor configured to call a computer program from a memory and run the computer program to cause a device mounted with the chip to perform the above method for link switching.

A computer-readable storage medium provided in the embodiments of the disclosure has stored therein a computer program. The computer program is run by a computer to perform the above method for link switching.

A computer program product provided in the embodiments of the disclosure includes a computer program. The computer program is run by a computer to perform the above method for link switching.

A computer program provided in the embodiments of the disclosure causes a computer to perform the above method for link switching when run on the computer.

According to the above technical solution, the terminal is switched between the relay link and the air interface direct link, and a best link quality is guaranteed for the terminal as much as possible, thus effective transmission of a service can be ensured. In addition, an interruption time of an ongoing service of the terminal can be minimized during the switching process.

### BRIEF DESCRIPTION OF THE DRAWINGS

The accompanying drawings, which are illustrated herein, provide a further understanding of the disclosure and constitute a part of this disclosure. The exemplary embodiments of the disclosure and their description are used to explain the disclosure and not to unduly limit the disclosure. In the drawings:
FIG. 1 is a schematic diagram of architecture of a communication system according to an embodiment of the disclosure.
FIG. 2 is a network architecture diagram based on a Device to Device (D2D) technology according to an embodiment of the disclosure.
FIG. 3 is a network architecture diagram based on a 5G technology according to an embodiment of the disclosure.
FIG. 4 is a network architecture diagram based on a relay mode according to an embodiment of the disclosure.
FIG. 5 is a first schematic flowchart of a method for link switching according to an embodiment of the disclosure.
FIG. 6 is a second schematic flowchart of a method for link switching according to an embodiment of the disclosure.
FIG. 7 is a third schematic flowchart of a method for link switching according to an embodiment of the disclosure.
FIG. 8 is a fourth schematic flowchart of a method for link switching according to an embodiment of the disclosure.
FIG. 9 is a first composition structure schematic diagram of a device for link switching according to an embodiment of the disclosure.
FIG. 10 is a second composition structure schematic diagram of a device for link switching according to an embodiment of the disclosure.
FIG. 11 is a schematic structural diagram of a communication device according to an embodiment of the disclosure.
FIG. 12 is a schematic structural diagram of a chip according to an embodiment of the disclosure.
FIG. 13 is a schematic block diagram of a communication system according to an embodiment of the disclosure.

### DETAILED DESCRIPTION

Technical solutions in the embodiments of the disclosure will be described with reference to the accompanying drawings in the embodiments of the disclosure. Apparently, the described embodiments are some embodiments of the disclosure rather than all of the embodiments. All other embodiments obtained by a person of ordinary skill in the art based on the embodiments of the disclosure without creative efforts shall fall within the protection scope of the disclosure.

The technical solutions of the embodiments of the disclosure may be applied to various communications systems, such as: a Long Term Evolution (LTE) system, an LTE Frequency Division Duplex (FDD) system, an LTE Time Division Duplex (TDD) system, a 5G communication system and future communication systems.

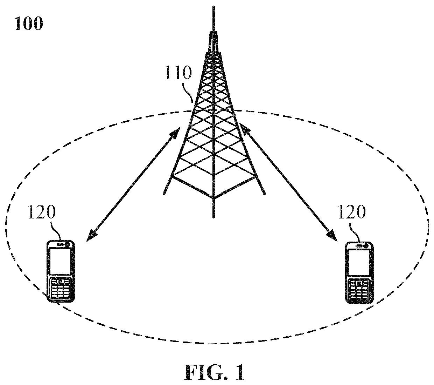

As an example, FIG. 1 illustrates a communication system 100 to which the embodiments of the disclosure are applied. The communication system 100 may include a network device 110. The network device 110 may be a device that communicates with a terminal 120 (also called as a communication terminal or a terminal device). The network device 110 may provide communication coverage for a particular geographic area, and may communicate with a terminal located within the coverage area. Optionally, the network device 110 may be an evolved NodeB (eNB or eNodeB) in an LTE system, or a wireless controller in a cloud radio access network (CRAN). The network device may be a mobile switching center, a relay station, an access point, an in-vehicle device, a wearable device, a hub, a switch, a network bridge, a router, a network side device in a 5G network, a network device in future communication systems or the like.

The wireless communication system 100 further includes at least one terminal 120 located within the coverage of the network device 110. The "terminal" used herein includes, but is not limited to, a device configured to receive/send a communication signal through a wired line connection, such as through a public switched telephone network (PSTN), a digital subscriber line (DSL), a digital cable, a directness cable and/or another data connection/network; and/or through a wireless interface, such as for a cellular network, a wireless local area network (WLAN), a digital television network like a Digital Video Broadcasting-Handheld (DVB-H) network, a satellite network, and an Amplitude Modulated (AM)-Frequency Modulated (FM) broadcasting transmitter; and/or another terminal; and/or a device of Internet of things (IoT) device. The terminal which is configured to communicate through a wireless interface may be called as a "wireless communication terminal", a "wireless terminal" or a "mobile terminal". Examples of a mobile terminal include but are not limited to: a satellite telephone or a cellular telephone; a personal communications system (PCS) terminal that is capable of combining capabilities of cellular radio telephones, data process, faxes and data communication; a PDA that may include a cellular radiotelephone, a pager, an Internet/Intranet access, a Web browser, an organizer, a calendar and/or a global positioning system (GPS) receiver; and a conventional laptop and/or palmtop receiver or another electronic device that includes a radiotelephone transceiver. The terminal may be an access terminal, user equipment (UE), a subscriber unit, a subscriber station, a mobile station, a mobile console, a remote station, a remote terminal, a mobile device, a user terminal, a terminal, a wireless communication device, a user agent, or a user apparatus. The access terminal may be a cellular phone, a cordless phone, a session initiation protocol (SIP) phone, a wireless local loop (WLL) station, a personal digital assistant (PDA), a handheld device having a wireless communication function, a computing device, another processing device connected to a wireless modem, an in-vehicle device, a wearable device, a terminal in a 5G network, a terminal in a future evolved PLMN or the like.

Optionally, the terminals 120 may perform a D2D communication with each other.

Optionally, the 5G communication system or network may be further referred to as a new radio (NR) system or network.

FIG. 1 exemplarily illustrates one network device and two terminals. Optionally, the communication system 100 may include multiple network devices and coverage of each network device may include another number of terminals. There are no limits made thereto in the embodiments of the present disclosure.

Optionally, the communication system 100 may further include other network entities such as a network controller and a mobility management entity. This is not limited in this embodiment of the disclosure.

It should be understood that, a device in the network/system of embodiments of the disclosure having a communication function may be referred to as a communication device. Taking the communication system 100 illustrated in FIG. 1 as an example, a communication device may include a network device 110 and a terminal 120 having a communication function. The network device 110 and the terminal 120 may be specific devices described above, details are not described herein again. The communication device may further include other devices in the communication system 100, such as a network controller, a mobility management entity or the like. This is not limited in this embodiment of the disclosure.

It should be understood that, terms "system" and "network" in the disclosure are usually interchangeably used. The term "and/or" in the disclosure is only an association relationship for describing the associated objects, and represents that three relationships may exist, for example, A and/or B may represent the following three cases: A exists separately, both A and B exist, and B exists separately. In addition, the character "/" in this specification generally indicates an "or" relationship between the associated objects.

For convenience of understanding the technical solutions of the embodiments of the disclosure, related technical solutions involved in embodiments of the disclosure are described below.

### ➢ Direct communication between devices

The direct communication between devices is mainly applied to applications such as Augmented Reality (AR) games and Virtual Reality (VR) games, which have high requirements for service quality such as rate, delay, packet loss rate, high-speed codec. For example, for the VR games, the rate is required to be 10Gbps, and the packet loss rate may not exceed 10E-4. For a session established for the direct communication service between devices, terminals in a same session may be considered as forming one service application group, for example, forming a team in a game. The terminals in a group may have the following possible communication modes, the communication modes may be used independently or in combination:
- A communication mode used when the terminals are close to each other: for example, a communication mode in which the D2D technology is used for broadcast or multicast. For another example, a communication mode in which a sidelink is established between devices to perform point-to-point communication, the communication mode is also called as a communication mode based on a PC5 interface. It is to be noted that PC5 interface refers to an interface for direct communication between devices.
- A communication mode used when the terminals are away from each other: for example, a communication mode using the following path: a first terminal → a first network → an application server → a second network → a second terminal. The communication mode is also called as a communication mode based on a Uu interface.

### ➢ Terminals communicating with each other through D2D

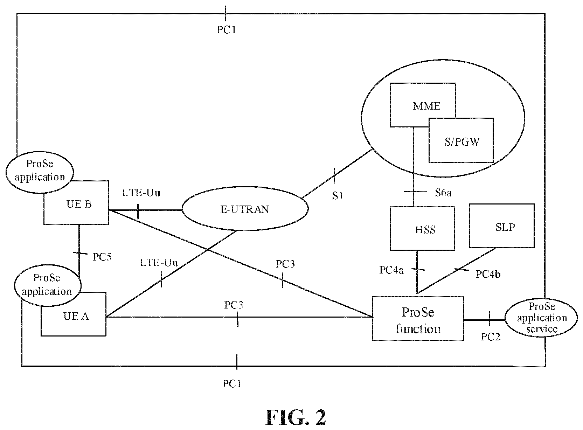

FIG. 2 is an optional network architecture diagram based on the D2D technology. As illustrated in FIG. 2, devices involved in the architecture include: UE, a Evolved Universal Terrestrial Radio Access Network (E-UTRAN), a Mobility Management Entity (MME) network element, a Home Subscriber Server (HSS), a Service/Packet Data Network Gateway (S/PGW), a Proximity-based Services (ProSe) function network element, a ProSe application servicer, and a Secure User Plane Location (SUPL) location platform (SLP) network element.

UE A and UE B communicate with each other via a PC5 interface, and the communication path based on the PC5 interface is called as a terminal direct communication path.

### ➢ Terminals communicating with each other through a network

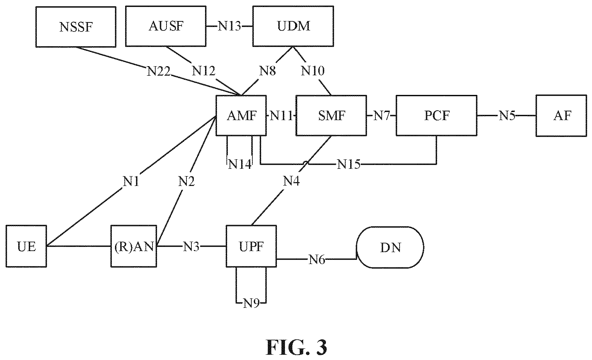

FIG. 3 is an optional network architecture diagram based on the 5G technology. As illustrated in FIG. 3, devices involved in the architecture include: UE, a Radio Access Network (RAN), a User Plane Function (UPF), a Data Network (DN), a core Access and Mobility Management Function (AMF), a Session Management Function (SMF), a Policy Control Function (PCF), an Application Function (AF), an Authentication Server Function (AUSF), a Unified Data Management (UDM).

Communication between terminals through the network may refer to the network architecture illustrated in FIG. 3, in this network architecture, data of the terminal is transmitted to the application functio (i.e. AF), and the AF transmits the data to an opposite terminal.

### ➢ Terminals communicating with each other through a relay device

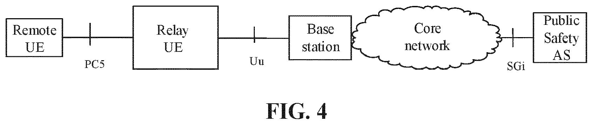

FIG. 4 is an optional network architecture diagram based on a relay mode. As illustrated in FIG. 4, devices involved in the architecture include: remote UE, relay UE, a base station, a core network, etc. The remote UE communicates with the relay UE via a PC5 interface, and the relay UE communicates with the base station via a Uu interface.

Based on the above communication modes, there are two paths to for selection in a process of the terminal communicating with the terminal or communicating with the network. One path is an air interface direct path (also called as an air interface direct link), and the other path is a relay path (also called as a relay link). When the path through which the terminal communicates with the peer side is switched to the other path, it may result in service interruption due to change of an Internet Protocol (IP) address. In view of the above situation, the following technical solutions are proposed in the embodiments of the disclosure. In the technical solutions of the embodiments of the disclosure, the terms "link" and "path" have the same meaning and may be replaced with each other.

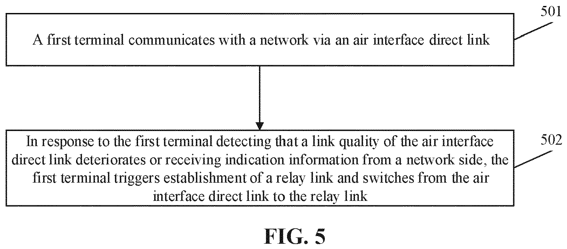

FIG. 5 is a first schematic flowchart of a method for link switching according to an embodiment of the disclosure. As illustrated in FIG. 5, the method for link switching includes the following operations.

At 501, a first terminal communicates with a network via an air interface direct link.

In an optional implementation, the first terminal is remote UE.

In an embodiment of the disclosure, the air interface direct link is a transmission link based on a Uu interface, and the Uu interface is an interface between the first terminal and an access network.

For example, a path through which the first terminal communicates with the network via the air interface direct link is: the first terminal → RAN → UPF.

At 502, in response to the first terminal detecting that a link quality of the air interface direct link deteriorates or receiving indication information from a network side, the first terminal triggers establishment of a relay link and switches from the air interface direct link to the relay link.

In an optional implementation of the disclosure, a first threshold is pre-configured by a network side, the first threshold value is used for determining the link quality. For example, the fact that the link quality is less than or equal to the first threshold indicates that the link quality is poor; and the fact that the link quality is greater than the first threshold indicates that the link quality is good. Based on the above, the first terminal detecting that the link quality of the air interface direct link deteriorates refers to the first terminal detecting that the link quality of the air interface direct link is less than or equal to the first threshold.

In another optional implementation of the disclosure, the network side triggers the first terminal to establish the relay link by transmitting indication information to the first terminal. For example, the network side may determine whether to transmit the indication information to the first terminal according to a detection result of the link quality of the air interface direct link reported by the first terminal.

It is to be noted that the poor link quality may also be represented as that coverage of a link signal is weak or failure of the link is about to occur .

In an embodiment of the disclosure, the fact that the first terminal detects that the link quality of the air interface direct link is less than or equal to the first threshold indicates that the link quality of the air interface direct link is poor, coverage of the air interface direct link is weak, or the failure of the air interface direct link is about to occur. In this case, the first terminal may attempt to discover an appropriate relay device (i.e., ProSe UE-to-Network Relay). Specifically, the first terminal may perform a relay device discovery procedure (i.e., ProSe UE-to-Network Relay discovery process). When the first terminal discovers a second terminal as the relay device, the first terminal establishes a connection with the second terminal, and the first terminal triggers the second terminal to establish the relay link.

In an embodiment of the disclosure, the relay link is a transmission link based on a PC5 interface and the Uu interface, the PC5 interface is an interface between the first terminal and the second terminal, and the Uu interface is an interface between the second terminal and an access network. Herein, the first terminal is the remote terminal, and the second terminal is the relay device.

For example, a path through which the first terminal communicates with the network via a relay link is: the first terminal → the second terminal → RAN → UPF.

In an optional implementation, if a first core network element receiving a remote UE report message, the first core network element determines that the relay link has been established and triggers a release procedure or a deactivation procedure for a first Protocol Data Unit (PDU) session. The first PDU session is a PDU session associated with the air interface direct link. Herein, the first core network element is, for example, an SMF

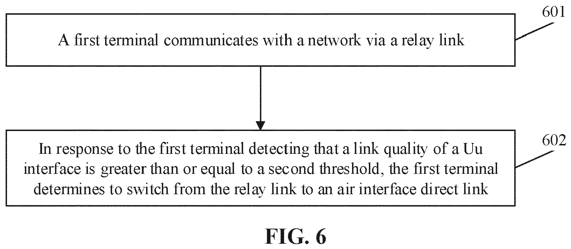

FIG. 6 is a second schematic flowchart of a method for link switching according to an embodiment of the disclosure. As illustrated in FIG. 6, the method for link switching includes the following operations.

At 601, a first terminal communicates with a network via a relay link.

In an optional implementation, the first terminal is remote UE.

In an embodiment of the disclosure, the relay link is a transmission link based on a PC5 interface and a Uu interface, the PC5 interface is an interface between the first terminal and a second terminal, and the Uu interface is an interface between a second terminal and an access network. Herein, the first terminal is remote UE and the second terminal is relay UE.

For example, a path via which the first terminal communicates with the network via a relay link is: the first terminal → the second terminal → RAN → UPF.

At 602, if the first terminal detects that a link quality of a Uu interface is greater than or equal to a second threshold, the first terminal determines to switch from the relay link to an air interface direct link.

In an optional implementation of the disclosure, a second threshold is pre-configured by a network side, the second threshold value is used for determining the link quality. For example, the fact that the link quality is less than or equal to the second threshold indicates that the link quality is poor, and the fact that the link quality is greater than the second threshold indicates that the link quality is good.

It is to be noted that the poor link quality may also be represented as that coverage of a link signal is weak or failure of the link is about to occur.

In an embodiment of the disclosure, the fact that the first terminal detects that the link quality of the Uu interface is greater than or equal to the second threshold indicates that the link quality of the air interface direct link is good or coverage of the air interface direct link is strong. In this case, the first terminal triggers to establish and/or activate the first PDU session. The first PDU session is a PDU session associated with the air interface direct link.

In an optional implementation, the first terminal triggers a service request procedure. The service request procedure is used for establishing and/or activating the first PDU session, and the first PDU session is a PDU session associated with the air interface direct link. In another optional implementation, the first terminal triggers a PDU session establishment procedure. The PDU session establishment procedure is used for establishing and/or activating the first PDU session, and the first PDU session is a PDU session associated with the air interface direct link.

Further, in an optional implementation, a first core network element transmits a first notification message to a second core network element during the service request procedure or the PDU session establishment procedure. The first notification message is used for notifying at least one of the followings:
the first terminal switching from the relay link to the air interface direct link;
a second PDU session (i.e., a PDU session associated with the relay link) used by the first terminal before the first terminal switches to the air interface direct link; or
the first PDU session used by the first terminal after the first terminal switches to the air interface direct link.

In the above solution, the first core network element is, for example, an SMF, and the second core network element is, for example, a UPF.

Further, in an embodiment of the disclosure, in a case that the first PDU session is in an active state, the first terminal triggers the second terminal to release a PC5 interface. The second terminal updates a remote UE report and transmits a remote UE report message to a second core network element via the SMF after the second terminal releases the PC5 interface with the first terminal. The remote UE report message is used for notifying that the first terminal does not use the relay link. Then, the second core network element transmits downlink data to the first terminal via the air interface direct link. Accordingly, the first terminal receives the downlink data transmitted by the second core network element via the air interface direct link.

In the above solution, the second core network element is, for example, UPF.

The technical solutions of the embodiments of the disclosure will be illustrated below with reference to specific examples.

### First Example

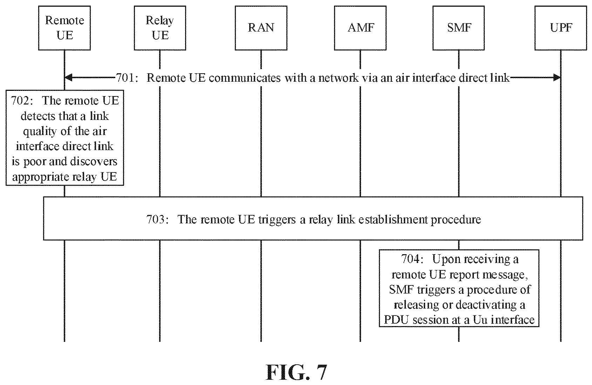

FIG. 7 illustrates a flowchart of remote UE switching from an air interface direct link to a relay link. It is to be noted that the air interface direct link may also be called as a Uu link, a Uu direct link or a Uu wireless link, the term "link" may also be replaced with "path" or "connection". As illustrated in FIG. 7, the switching process includes the following operations.

At 701, remote UE communicates with a network via an air interface direct link.

At 702, the remote UE detects that a link quality of the air interface direct link is poor and discovers appropriate relay UE.

Herein, the fact that the remote UE detects that the link quality of the air interface direct link is poor may also be understood that the remote UE detects that the air interface direct link is going to fail. For example, a threshold (specifically, a link quality threshold) may be configured by a network side, the fact that the remote UE detects that the link quality of the air interface direct link is less than or equal to the threshold indicates that the link quality of the air interface direct link is poor. In this case, the remote UE performs a relay device discovery procedure (i.e., ProSe UE-to-Network Relay discovery process) to attempt to discover an appropriate relay device (i.e., ProSe UE-to-Network Relay).

At 703, the remote UE triggers a relay link establishment procedure.

Specifically, after the remote UE discovers the appropriate relay device, i.e. the relay UE, the remote UE determines to establish a connection with the relay UE. Then, the remote UE triggers the relay UE to perform the relay link establishment procedure.

At 704, upon receiving a remote UE report message, SMF triggers a procedure of releasing or deactivating a PDU session at a Uu interface.

Specifically, after the SMF receives the remote UE report message from the relay UE, the SMF determines that the relay link is ready (or has been established), and initiates the release or deactivation procedure for the first PDU session. The first PDU session is a PDU session for the Uu interface (i.e., a PDU session associated with the air interface direct link).

### Second Example

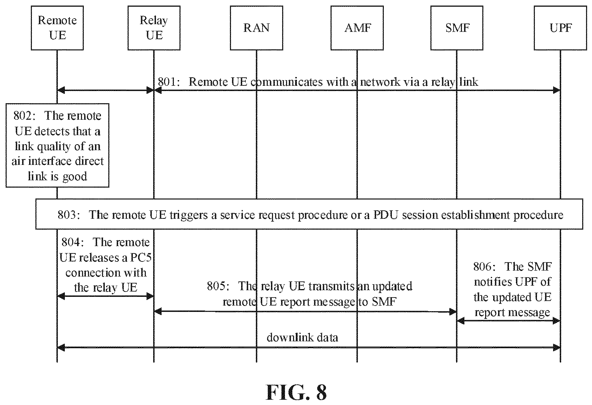

FIG. 8 illustrates a flowchart of remote UE switching from a relay link to an air interface direct link. It is to be noted that the air interface direct link may also be called as a Uu link, a Uu direct link or a Uu wireless link, the term "link" may also be replaced with "path" or "connection". As illustrated in FIG. 8, the switching process includes the following operations.

At 801, remote UE communicates with a network via a relay link.

At 802, the remote UE detects that a link quality of an air interface direct link is good.

Herein, the fact that the remote UE detects that the link quality of the air interface direct link is good may also be understood that the remote UE detects that coverage of the air interface direct link is strong. For example, a threshold (specifically, a link quality threshold) may be configured by a network side, the fact that the remote UE detects that the link quality of the air interface direct link is more than or equal to the threshold indicates that the link quality of the air interface direct link is good. In practice implementation, the remote UE may detect the air interface direct link by detecting the link quality at the Uu interface. In such case, the remote UE determines to switch to the air interface direct link, to communicate with a network via the air interface direct link.

At 803, the remote UE triggers a service request procedure or a PDU session establishment procedure.

Specifically, the remote UE triggers the service request procedure or the PDU session establishment procedure to establish and/or activate a new PDU session (i.e., a first PDU session) used for the air interface direct link.

Further, optionally, during the service request procedure or the PDU session establishment procedure, SMF notifies UPF that link switching is occurred at the remote UE (i.e., the link is switched from the relay link to the air interface direct link) through a notification. Further, the notification is also used for indicating that the link switch is occurred at which UE and/or which PDU session is an original PDU session before the link switching is occurred (i.e., the SMF notifies the UPF the path switch from the relay path to direct Uu path for the remote UE or for the associated relay PDU Session). Herein, the original PDU session (i.e., a second PDU session) may also be called as an associated relay PDU session. The associated relay PDU session refers to a PDU session established by the relay UE for a remote application service that needs to be relayed (i.e. the associated relay PDU Session refers to the PDU Session the Relay UE established for the remote application traffic to be relayed).

In an optional implementation, the SMF determines the remote UE and/or the PDU session based on the remote UE ID information carried in PDU session establishment request and/or the UE ID information carried in the remote UE report message (i.e., the SMF determines the remote UE or the PDU Session based on the remote UE ID information in PDU Session establishment Request and the remote UE ID in the Remote UE Information report received before this step).

At 804, the remote UE releases a PC5 connection with the relay UE.

Herein, when the PDU session associated with the air interface direct link is in an active state, the remote UE releases the PC5 connection with the relay UE.

At 805, the relay UE transmits an updated remote UE report message to the SMF

Herein, the updated remote UE report message carries information of the remote UE updated by the relay UE. The SMF may determine that the remote UE does not use the relay link based on the UE report message.

At 806, the SMF notifies the UPF of the updated UE report message.

Herein, the SMF transmits a notification message to the UPF via an N4 interface. The notification message includes the updated UE report message.

Herein, since the PC5 connection between the remote UE and the relay UE has been released, the updated UE report message will not carry the information of the remote UE.

Based on the updated UE report message, the UPF may determine that the remote UE does not use the relay link, and the UPF will not forward downlink data to the remote UE through a relay PDU session. It is to be noted that the relay PDU session herein refers to a PDU session associated with the relay link (i.e., the second PDU session).

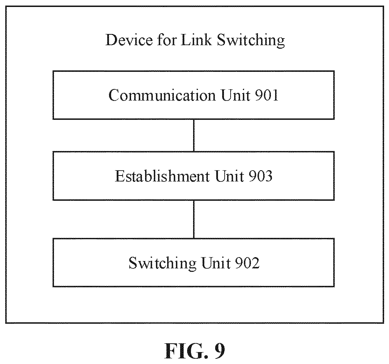

FIG. 9 is a first composition structure schematic diagram of a device for link switching according to an embodiment of the disclosure. The device is applied to a first terminal, as illustrated in FIG. 9, the device for link switching includes a communication unit 901 and a switching unit 902.

The communication unit 901 is configured to communicate with a network via an air interface direct link.

The switching unit 902 is configured to, in response to detecting that a link quality of the air interface direct link deteriorates or receiving indication information from a network side, trigger establishment of a relay link and switch from the air interface direct link to the relay link.

In an optional implementation, the air interface direct link is a transmission link based on the Uu interface, and the Uu interface is an interface between the first terminal and an access network.

In an optional implementation, the relay link is a transmission link based on a PC5 interface and a Uu interface, the PC5 interface is an interface between the first terminal and a second terminal, and the Uu interface is an interface between the second terminal and an access network.

In an optional implementation, the first terminal is a remote terminal, and the second terminal is a relay device.

In an optional implementation, the operation that detecting that the link quality of the air interface direct link deteriorates includes: detecting that the link quality of the air interface direct link is less than or equal to a first threshold.

In a possible implementation, the device may further include an establishment unit 903.

The establishment unit 903 is configured to discover a second terminal as a relay device, establish a connection with the second terminal, and trigger the second terminal to establish the relay link.

In an optional implementation, in response to a first core network element receiving a remote UE report message, the first core network element determines that the relay link has been established and triggers a release procedure or a deactivation procedure for a first PDU session. The first PDU session is a PDU session associated with the air interface direct link.

It should be understood by a person of ordinary skill in the art that the relevant description of the above device for link switching in the embodiments of the disclosure may be understood with reference to relevant description of the method for link switching in the embodiments of the disclosure.

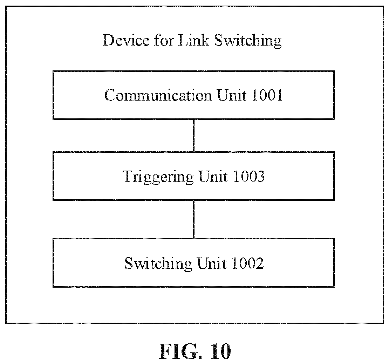

FIG. 10 is a second composition structure schematic diagram of a device for link switching according to an embodiment of the disclosure. The device is applied to a first terminal, as illustrated in FIG. 10, the device for link switching includes a communication unit 1001 and a switching unit 1002.

The communication unit 1001 is configured to communicate with a network via a relay link.

The switching unit 1002 is configured to, in response to detecting that a link quality of a Uu interface is greater than or equal to a second threshold, determine to switch from the relay link to an air interface direct link.

In an optional implementation, the air interface direct link is a transmission link based on the Uu interface, and the Uu interface is an interface between the first terminal and an access network.

In an optional implementation, the relay link is a transmission link based on a PC5 interface and a Uu interface, the PC5 interface is an interface between the first terminal and a second terminal, and the Uu interface is an interface between a second terminal and an access network.

In an optional implementation, the first terminal is a remote terminal, and the second terminal is a relay device.

In a possible implementation, the device may further include a triggering unit 1003.

The triggering unit 1003 is configured to trigger a service request procedure, where the service request procedure is used for at least one of establishing a first PDU session or activating the first PDU session, and the first PDU session is a PDU session associated with the air interface direct link; or trigger a PDU session establishment procedure, where the PDU session establishment procedure is used for at least one of establishing the first PDU session or activating the first PDU session, and the first PDU session is a PDU session associated with the air interface direct link.

In an optional implementation, a first core network element transmits a first notification message to a second core network element during the service request procedure or the PDU session establishment procedure. The first notification message is used for notifying at least one of the followings:
the first terminal switching from the relay link to the air interface direct link;
a second PDU session used by the first terminal before the first terminal switches to the air interface direct link; or
the first PDU session used by the first terminal after the first terminal switches to the air interface direct link.

In an optional implementation, the triggering unit 1003 is further configured to, in response to the first PDU session being in an active state, trigger a second terminal to release a PC5 interface.

The second terminal updates a remote UE report and transmits a remote UE report message to a second core network element via a first core network element after the second terminal releases the PC5 interface with the first terminal. The remote UE report message is used for notifying that the first terminal does not use the relay link.

In an optional implementation, the communication unit 1001 is further configured to receive downlink data transmitted by the second core network element via the air interface direct link.

It should be understood by a person of ordinary skill in the art that the relevant description of the above device for link switching in the embodiments of the disclosure may be understood with reference to relevant description of the method for link switching in the embodiments of the disclosure.

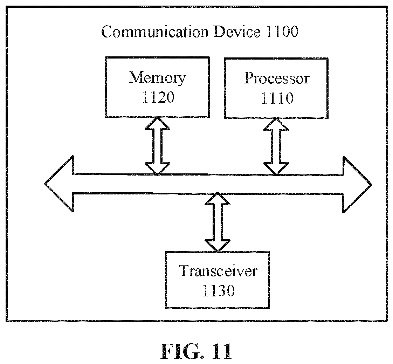

FIG. 11 is a schematic structural diagram of a communication device 1100 according to an embodiment of the disclosure. The communication device may be a terminal and may also be a network device. The communication device 1100 illustrated in FIG. 11 includes a processor 1110. The processor 1110 may be configured to call and run a computer program stored in a memory to perform the method according to the embodiments of the disclosure.

Optionally, as illustrated in FIG. 11, the communication device 1100 may further include a memory 1120. The processor 1110 may be configured to call and run the computer program stored in the memory 1120 to perform the method according to an embodiment of the disclosure.

The memory 1120 may be a separate device independent from the processor 1110, or may be integrated in the processor 1110.

Optionally, as illustrated in FIG. 11, the communication device 1100 may further include a transceiver 1130. The processor 1110 may control the transceiver 1130 to communicate with other devices, specifically, to transmit information or data to other devices, or receive information or data from other devices.

The transceiver 1130 may include a transmitter and a receiver. The transceiver 1130 may further include an antenna, the number of the antenna may be one or more.

Optionally, the communication device 1100 may specifically be a network device in embodiments of the disclosure. The communication device 1100 may perform corresponding processes that are implemented by the network device in various methods of the embodiments of the disclosure. For brevity, details are not described herein again.

Optionally, the communication device 1100 may specifically be a mobile terminal/terminal in embodiments of the disclosure. The communication device 1100 may perform corresponding processes that are performed by the mobile terminal/terminal in various methods of the embodiments of the disclosure. For brevity, details are not described herein again.

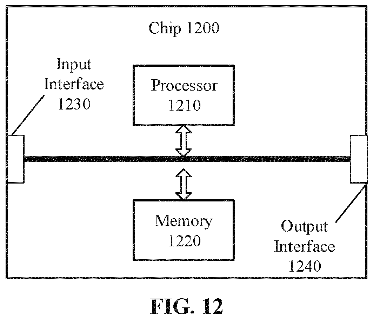

FIG. 12 is a schematic structural diagram of a chip according to an embodiment of the disclosure. The chip 1200 illustrated in FIG. 12 includes a processor 1210. The processor 1210 may be configured to call and run the computer program stored in a memory to perform the method according to an embodiment of the disclosure.

Optionally, as illustrated in FIG. 12, the chip 1200 may further include a memory 1220. The processor 1210 may be configured to call and run the computer program stored in the memory 1220 to perform the method according to an embodiment of the disclosure.

The memory 1220 may be a separate device independent from the processor 1210, or may be integrated in the processor 1210.

Optionally, the chip 1200 may further include an input interface 1230. The processor 1210 may control the input interface 1230 to communicate with other devices or chips, specifically, to obtain information or data from other devices or chips.

Optionally, the chip 1200 may further include an output interface 1240. The processor 1210 may control the output interface 1240 to communicate with other devices or chips, specifically, to output information or data to other devices or chips.

Optionally, the chip may be applied to a network device in embodiments of the disclosure. The chip may perform corresponding processes that are performed by the network device in various methods of the embodiments of the disclosure. For brevity, details are not described herein again.

Optionally, the chip may be applied to a mobile terminal/terminal in the embodiments of the disclosure. The chip may perform corresponding processes that are performed by the mobile terminal/terminal in various methods of the embodiments of the disclosure. For brevity, details are not described herein again.

It should be understood that, the chip mentioned in the embodiments of the disclosure may be also referred to as a system-level chip, a system chip, a chip system or a chip of a system on chip, etc.

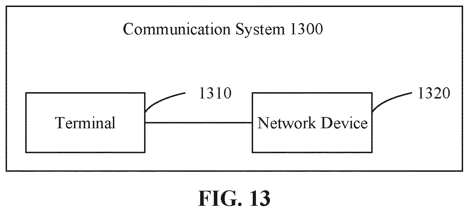

FIG. 13 is a schematic block diagram of a communication system 1300 according to an embodiment of the disclosure. As illustrated in FIG. 13, the communication system 1300 includes a terminal 1310 and a network device 1320.

The terminal 1310 may be configured to perform corresponding functions that are performed by the terminal of the above method. The network device 1320 may be configured to perform corresponding functions that are performed by the network device of the above method. For brevity, details are not described herein again.

It should be understood that, the processor in the embodiments of the disclosure may be an integrated circuit chip, and has a signal processing capability. During implementation, the steps of the foregoing method embodiments may be implemented by using a hardware integrated logic circuit in the processor or implemented by using instructions in a software form. The foregoing processor may be a general purpose processor, a Digital Signal Processor (DSP), an Application-Specific Integrated Circuit (ASIC), a Field Programmable Gate Array (FPGA), or another programmable logical device, discrete gate or transistor logical device, or discrete hardware component. The processor may implement or perform methods, steps and logical block diagrams disclosed in the embodiments of the disclosure. The general purpose processor may be a microprocessor or the processor may be any conventional processor and the like. Steps of the methods disclosed with reference to the embodiments of the disclosure may be directly executed and completed by means of a hardware decoding processor, or may be executed and completed by using a combination of hardware and software modules in the decoding processor. The software module may be located in a mature storage medium in the field, such as a random access memory, a flash memory, a read-only memory, a programmable read-only memory, an electrically-erasable programmable memory, or a register. The storage medium is located in the memory, and the processor reads information in the memory and completes the steps in the foregoing methods in combination with hardware of the processor.

It can be understood that, the memory in the embodiments of the disclosure may be a volatile memory or a non-volatile memory, or may include both a volatile memory and a non-volatile memory. The non-volatile memory may be a Read-Only Memory (ROM), a Programmable Read-Only Memory (PROM), an Erasable PROM (EPROM), an Electrically EPROM (EEPROM) or a flash memory. The volatile memory may be a Random Access Memory (RAM), and is used as an external cache. Through exemplary but not limitative description, many forms of RAMs may be used, for example, a Static RAM (SRAM), a Dynamic RAM (DRAM), a Synchronous DDRAM (SDRAM), a Double Data Rate SDRAM (DDR SDRAM), an Enhanced SDRAM (ESDRAM), a Synch Link DRAM (SLDRAM) and a Direct Rambus RAM (DR RAM). It should be noted that, the memory for the system and the method described herein aims to include but not limited to these memories and any other suitable types of memories.

It should be understood that, the foregoing memory is exemplary but not limitative description, for example, the memory in the embodiments of the disclosure may be an SRAM, a DRAM, an SDRAM, a DDR SDRAM, an ESDRAM, an SLDRA) and a DR RAM, etc. It should be noted that, the memory in the embodiments of the disclosure aims to include but not limited to these memories and any other suitable types of memories.

An embodiment of the disclosure further provides a computer-readable storage medium, configured to store a computer program.

Optionally, the computer-readable storage medium may be applied to a network device in embodiments of the disclosure, and the computer program causes a computer to perform corresponding processes that are performed by the network device in various methods of the embodiments of the disclosure. For brevity, details are not described herein again.

Optionally, the computer-readable storage medium may be applied to a mobile terminal/terminal in embodiments of the disclosure, and the computer program causes a computer to perform corresponding processes that are performed by the mobile terminal/terminal in various methods of the embodiments of the disclosure. For brevity, details are not described herein again.

An embodiment of the disclosure further provides a computer program product including a computer program.

Optionally, the computer program product may be applied to a network device in embodiments of the disclosure, and the computer program instructions cause a computer to perform corresponding processes that are performed by the network device in various methods of the embodiments of the disclosure. For brevity, details are not described herein again.

Optionally, the computer program product may be applied to a mobile terminal/terminal in embodiments of the disclosure, and the computer programs cause a computer to perform corresponding processes that are performed by the mobile terminal/terminal in various methods of the embodiments of the disclosure. For brevity, details are not described herein again.

An embodiment of the disclosure further provides a computer program.

Optionally, the computer program may be applied to a network device in embodiments of the disclosure, when the computer program is run by a computer, it causes the computer to perform corresponding processes that are performed by the network device in various methods of the embodiments of the disclosure. For brevity, details are not described herein again.

Optionally, the computer program may be applied to a mobile terminal/terminal in embodiments of the disclosure, when the computer program is run by a computer, it causes the computer to perform corresponding processes that are performed by the mobile terminal/terminal in various methods of the embodiments of the disclosure. For brevity, details are not described herein again.

A person of ordinary skill in the art may be aware that, in combination with the examples described in the embodiments disclosed in this specification, units and algorithm steps may be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, device, and method may be implemented in other schemes. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of this application may be integrated into one processing unit, or each of the units may exist alone physically, or two or more units are integrated into one unit.

When the functions are implemented in a form of a software functional module and sold or used as an independent product, the functions may be stored in a computer-readable storage medium. Based on such an understanding, the technical solutions of this application essentially, or the part contributing to the prior art, or part of the technical solutions may be implemented in the form of a software product. The computer software product is stored in a storage medium, and includes several instructions for instructing a computer device (which may be a personal computer, a server, a network device, and the like) to perform all or a part of the steps of the method described in the embodiment of the disclosure. The foregoing storage medium includes: any medium that can store program codes, such as a USB flash disk, a removable hard disk, an ROM, an RAM, a magnetic disk, or an optical disk.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for link switching, comprising:
communicating, by a first terminal, with a network via an air interface direct link; and
in response to the first terminal detecting that a link quality of the air interface direct link deteriorates or receiving indication information from a network side, triggering, by the first terminal, establishment of a relay link and switching from the air interface direct link to the relay link.

2. The method of claim 1, wherein the air interface direct link is a transmission link based on a Uu interface, and the Uu interface is an interface between the first terminal and an access network.

3. The method of claim 1 or 2, wherein the relay link is a transmission link based on a PC5 interface and a Uu interface, the PC5 interface is an interface between the first terminal and a second terminal, and the Uu interface is an interface between the second terminal and an access network.

4. The method of claim 3, wherein the first terminal is a remote terminal, and the second terminal is a relay device.

5. The method of any one of claims 1 to 4, wherein detecting, by the first terminal, that the link quality of the air interface direct link deteriorates comprises: detecting, by the first terminal, that the link quality of the air interface direct link is less than or equal to a first threshold.

6. The method of any one of claims 1 to 5, wherein triggering, by the first terminal, the establishment of the relay link comprises:
discovering, by the first terminal, a second terminal as a relay device and establishing a connection with the second terminal; and
triggering, by the first terminal, the second terminal to establish the relay link.

7. The method of any one of claims 1 to 6, further comprising:
in response to a first core network element receiving a remote user equipment (UE) report message, the first core network element determines that the relay link has been established and triggers a release procedure or a deactivation procedure for a first Protocol Data Unit (PDU) session, wherein the first PDU session is a PDU session associated with the air interface direct link.

8. A method for link switching, comprising:
communicating, by a first terminal, with a network via a relay link; and
in response to the first terminal detecting that a link quality of a Uu interface is greater than or equal to a second threshold, determining, by the first terminal, to switch from the relay link to an air interface direct link.

9. The method of claim 8, wherein the air interface direct link is a transmission link based on the Uu interface, and the Uu interface is an interface between the first terminal and an access network.

10. The method of claim 8 or 9, wherein the relay link is a transmission link based on a PC5 interface and the Uu interface, the PC5 interface is an interface between the first terminal and a second terminal, and the Uu interface is an interface between the second terminal and an access network.

11. The method of claim 10, wherein the first terminal is a remote terminal, and the second terminal is a relay device.

12. The method of any one of claims 8 to 11, further comprising:
triggering, by the first terminal, a service request procedure, wherein the service request procedure is used for at least one of establishing a first Protocol Data Unit (PDU) session or activating the first PDU session, and the first PDU session is a PDU session associated with the air interface direct link;
or
triggering, by the first terminal, a PDU session establishment procedure, wherein the PDU session establishment procedure is used for at least one of establishing the first PDU session or activating the first PDU session, and the first PDU session is a PDU session associated with the air interface direct link.

13. The method of claim 12, further comprising:
a first core network element transmitting a first notification message to a second core network element during the service request procedure or the PDU session establishment procedure, wherein the first notification message is used for notifying at least one of the followings:
the first terminal switching from the relay link to the air interface direct link;
a second PDU session used by the first terminal before the first terminal switches to the air interface direct link; or
the first PDU session used by the first terminal after the first terminal switches to the air interface direct link.

14. The method of claim 12 or 13, further comprising:
in response to the first PDU session being in an active state, triggering, by the first terminal, a second terminal to release a PC5 interface; wherein
the second terminal updates a remote user equipment (UE) report and transmits a remote UE report message to a second core network element via a first core network element after the second terminal releases the PC5 interface with the first terminal, and wherein the remote UE report message is used for notifying that the first terminal does not use the relay link.

15. The method of claim 14, further comprising:
receiving, by the first terminal, downlink data transmitted by the second core network element via the air interface direct link.

16. A device for link switching, applied to a first terminal, the device comprising:
a communication unit, configured to communicate with a network via an air interface direct link; and
a switching unit, configured to, in response to detecting that a link quality of the air interface direct link deteriorates or receiving indication information from a network side, trigger establishment of a relay link and switch from the air interface direct link to the relay link.

17. The device of claim 16, wherein the air interface direct link is a transmission link based on a Uu interface, and the Uu interface is an interface between the first terminal and an access network.

18. The device of claim 16 or 17, wherein the relay link is a transmission link based on a PC5 interface and a Uu interface, the PC5 interface is an interface between the first terminal and a second terminal, and the Uu interface is an interface between the second terminal and an access network.

19. The device of claim 18, wherein the first terminal is a remote terminal, and the second terminal is a relay device.

20. The device of any one of claims 16 to 19, wherein detecting that the link quality of the air interface direct link deteriorates comprises: detecting that the link quality of the air interface direct link is less than or equal to a first threshold.

21. The device of any one of claims 16 to 20, further comprising:
an establishment unit, configured to discover a second terminal as a relay device, establish a connection with the second terminal, and trigger the second terminal to establish the relay link.

22. The device of any one of claims 16 to 21, wherein in response to a first core network element receiving a remote user equipment (UE) report message, the first core network element determines that the relay link has been established and triggers a release procedure or a deactivation procedure for a first Protocol Data Unit (PDU) session, wherein the first PDU session is a PDU session associated with the air interface direct link.

23. A device for link switching, applied to a first terminal, the device comprising:
a communication unit, configured to communicate with a network via a relay link;
and
a switching unit, configured to, in response to detecting that a link quality of a Uu interface is greater than or equal to a second threshold, determine to switch from the relay link to an air interface direct link.

24. The device of claim 23, wherein the air interface direct link is a transmission link based on the Uu interface, and the Uu interface is an interface between the first terminal and an access network.

25. The device of claim 23 or 24, wherein the relay link is a transmission link based on a PC5 interface and the Uu interface, the PC5 interface is an interface between the first terminal and a second terminal, and the Uu interface is an interface between the second terminal and an access network.

26. The device of claim 25, wherein the first terminal is a remote terminal, and the second terminal is a relay device.

27. The device of any one of claims 23 to 26, further comprising:
a triggering unit, configured to:
trigger a service request procedure, wherein the service request procedure is used for at least one of establishing a first Protocol Data Unit (PDU) session or activating the first PDU session, and the first PDU session is a PDU session associated with the air interface direct link;
or
trigger a PDU session establishment procedure, wherein the PDU session establishment procedure is used for at least one of establishing the first PDU session or activating the first PDU session, and the first PDU session is a PDU session associated with the air interface direct link.

28. The device of claim 27, wherein a first core network element transmits a first notification message to a second core network element during the service request procedure or the PDU session establishment procedure, and wherein the first notification message is used for notifying at least one of the followings:
the first terminal switching from the relay link to the air interface direct link;
a second PDU session used by the first terminal before the first terminal switches to the air interface direct link; or
the first PDU session used by the first terminal after the first terminal switches to the air interface direct link.

29. The device of claim 27 or 28, wherein the triggering unit is further configured to, in response to the first PDU session being in an active state, trigger a second terminal to release a PC5 interface; and wherein
the second terminal updates a remote user equipment (UE) report and transmits a remote UE report message to a second core network element via a first core network element after the second terminal releases the PC5 interface with the first terminal, and wherein the remote UE report message is used for notifying that the first terminal does not use the relay link.

30. The device of claim 29, wherein the communication unit is further configured to receive downlink data transmitted by the second core network element via the air interface direct link.

31. A communication device, comprising a processor and a memory for storing a computer program, the processor is configured to call and run the computer program stored in the memory to perform the method according to any one of claims 1 to 15.

32. A chip, comprising a processor configured to call a computer program from a memory and run the computer program to cause a device mounted with the chip to perform the method according to any one of claims 1 to 15.

33. A computer-readable storage medium having stored therein a computer program, wherein the computer program is run by a computer to perform the method according to any one of claims 1 to 15.

34. A computer program product, comprising a computer program, wherein the computer program is run by a computer to perform the method according to any one of claims 1 to 15.

35. A computer program, wherein the computer program is run by a computer to perform the method according to any one of claims 1 to 15.
